Europäisches Patentamt

European Patent Office

Office européen des brevets

(11) Veröffentlichungsnummer: **0 503 102 A1**

# EUROPÄISCHE PATENTANMELDUNG

(21) Anmeldenummer: **91103533.5**

(22) Anmeldetag: **08.03.91**

(51) Int. Cl.5: **C03B 19/02**, G04B 39/00

(43) Veröffentlichungstag der Anmeldung:
**16.09.92 Patentblatt 92/38**

(84) Benannte Vertragsstaaten:
**CH DE FR GB IT LI**

(71) Anmelder: **BOCK & SCHUPP GMBH & CO. KG**
**Steubenstrasse 21, Postfach 240**
**W-7530 Pforzheim 1(DE)**

(72) Erfinder: **Bock, Jürgen**
**Hercyniastrasse 57c**
**W-7530 Pforzheim(DE)**
Erfinder: **Metzger-Pergau, Karla**
**Drosselweg 8**
**W-7541 Straubenhardt 4(DE)**

(74) Vertreter: **Trappenberg, Hans**
**Wendtstrasse 1 Postfach 1909**
**W-7500 Karlsruhe 21(DE)**

(54) **Uhrglas und Verfahren zu dessen Herstellung.**

(57) Die Herstellung von Ornament-Uhrgläsern im bisher bekannten Ätz- oder Schleifverfahren ist aufwendig und teuer. Die Erfindung schlägt vor, derartige Ornament-Uhrgläser zu gießen, wodurch eine wirtschaftliche Herstellung möglich ist.

EP 0 503 102 A1

Die Erfindung betrifft ein Verfahren zum Herstellen eines mit Ornamenten versehenen Uhrglases.

Uhrgläser werden üblicherweise im bekannten Flachglasverfahren hergestellt, also gegossen, gewalzt und geschliffen. Sollten die Uhrgläser mit Ornamenten versehen werden, so müssen diese Ornamente entweder eingeschliffen oder geätzt werden. Beide Verfahren sind recht aufwendig und damit sehr teuer. Ein weiteres, jedoch ebenfalls recht teures, Verfahren ist das Zusammenkleben verschiedener Uhrglaslagen, um damit einen Ornament-Effekt zu erzielen.

Aufgabe der Erfindung ist es eine Möglichkeit anzugeben, wie derartige Ornament-Uhrgläser auf wirtschaftliche Art und Weise hergestellt werden können. In erfindungsgemäßer Weise wird dies dadurch erreicht, daß eine dünnflüssige Glasschmelze in dünner Schicht in eine mit dem gewünschten Ornament versehene Form gegossen wird.

Nicht mehr also wie bisher wird das Uhrglas als Flachglas hergestellt und dann bearbeitet, sondern es wird im Gießverfahren direkt mit dem gewünschten Ornament versehen. Hierbei kann das Ornament erhaben oder vertieft sein und es können auch die Ornamentflächen, zweckmäßigerweise durch Ätzen, mattiert werden. Selbstverständlich können alle weiter bekannten Glasbearbeitungsverfahren noch nachträglich eingesetzt werden. Außerdem empfiehlt es sich, das Glas, um das Zifferblatt schlierenfrei erkennen zu können, einseitig plan zu schleifen. Das erfindungsgemäße Verfahren wird auch nicht verlassen, wenn das Uhrglas einstückig mit einem Uhrgehäuseteil zusammen gegossen wird. Durch die einstückige Herstellung des Uhrglases zusammen mit einem Uhrgehäuseteil ergeben sich außerdem noch weitere Einsparungsmöglichkeiten bei der Herstellung einer Uhr.

Die Glasschmelze kann nahezu beliebig zusammengesetzt sein, also mit unterschiedlichen Glasbildnern, Flußmitteln oder Stabilisatoren. Es ist lediglich bei feingliedrigen Ornamenten darauf zu achten, daß die Glasschmelze dünnflüssig genug ist, um dem Relief der Form auch folgen zu können.

**Patentansprüche**

1. Verfahren zum Herstellen eines mit Ornamenten versehenen Uhrglases,
   dadurch gekennzeichnet,
   daß eine dünnflüssige Glasschmelze in dünner Schicht in eine mit dem gewünschten Ornament versehene Form gegossen wird.

2. Verfahren nach Anspruch 1,
   dadurch gekennzeichnet,
   daß das Ornament erhaben oder vertieft ist.

3. Verfahren nach Anspruch 2,
   dadurch gekennzeichnet,
   daß die Ornamentflächen durch Ätzen mattiert sind.

4. Verfahren nach einem oder mehreren der vorhergehenden Ansprüche,
   dadurch gekennzeichnet,
   daß das Glas einseitig plan geschliffen ist.

5. Verfahren nach einem oder mehreren der vorhergehenden Ansprüche,
   dadurch gekennzeichnet,
   daß das Glas einstückig mit einem Uhrgehäuseteil zusammen gegossen ist.

Europäisches
Patentamt

**EUROPÄISCHER RECHERCHENBERICHT**

Nummer der Anmeldung

EP     91 10 3533

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | PATENT ABSTRACTS OF JAPAN vol. 14, no. 227 (C-718)(4170) 15 Mai 1990, & JP-A-2 55238 (FUJIKURA LTD) 23 Februar 1990, * das ganze Dokument * --- | 1-2, 4 | C03B19/02 G04B39/00 |
| X | GB-A-264264 (G.H. CORBETT) * das ganze Dokument * --- | 1-3 | |
| A | DE-U-8327171 (RODI & WIENENBERGER AG) * das ganze Dokument * ----- | 1-5 | |
| | | | **RECHERCHIERTE SACHGEBIETE (Int. Cl.5 )** C03B G04B C03C |

**Der vorliegende Recherchenbericht wurde für alle Patentansprüche erstellt**

| Recherchenort | Abschlußdatum der Recherche | Prüfer |
|---|---|---|
| BERLIN | 12 NOVEMBER 1991 | KUEHNE H.C. |